# EUROPEAN PATENT APPLICATION

(11) **EP 3 958 287 A1**
(43) Date of publication of application: **23.02.2022**
(21) Application number: 20275131.9
(22) Date of filing: 18.08.2020
(51) Int. Cl.: H01H 33/59, H01H 9/54, H02H 3/06, H02H 3/02, H02H 7/26, H02H 7/28

(54) **CIRCUIT INTERRUPTION ASSEMBLY**

(71) Applicant: General Electric Technology GmbH, 5400 Baden (CH)
(72) Inventor: SINGHAL, Sameer, Stafford, Staffordshire ST16 1WS (GB); WHITEHOUSE, Robert, Stafford, Staffordshire ST16 1WS (GB)
(74) Representative: Potter Clarkson

(57) **Abstract**

A circuit interruption assembly (20) comprises a circuit interruption device. The circuit interruption device comprises:
first and second electrical terminals (22,24) for connection to an electrical network (34);
a first current-conductive branch (26) extending between the first and second electrical terminals (22,24), the first current-conductive branch (26) including at least one first switching element (36), the or each first switching element (36) configured to be switchable to selectively: close to permit current to flow in the first current-conductive branch (26); and open to block current from flowing in the first current-conductive branch (26); and
a controller (32) configured to selectively control the switching of the or each first switching element (36) to carry out pulse width modulation to regulate current flowing through the circuit interruption device during a closure operation of the circuit interruption assembly (20).

## Description

The invention relates to a circuit interruption assembly, an electrical network comprising a plurality of circuit interruption assemblies, a method of using a circuit interruption assembly and a method of fault clearance for an electrical network.

It is known to use a circuit breaker to disconnect electrical equipment from an electrical network to prevent an uncontrolled fault current from flowing through the electrical equipment.

According to a first aspect of the invention, there is provided a circuit interruption assembly comprising a circuit interruption device, the circuit interruption device comprising:
first and second electrical terminals for connection to an electrical network;
a first current-conductive branch extending between the first and second electrical terminals, the first current-conductive branch including at least one first switching element, the or each first switching element configured to be switchable to selectively: close to permit current to flow in the first current-conductive branch; and open to block current from flowing in the first current-conductive branch; and
a controller configured to selectively control the switching of the or each first switching element to carry out pulse width modulation to regulate current flowing through the circuit interruption device during a closure operation of the circuit interruption assembly.

For the purposes of this specification, opening a circuit interruption assembly refers to the use of the circuit interruption device to open a closed electrical network to interrupt current flow in the electrical network, while closing a circuit interruption assembly refers to the use of the circuit interruption device to complete an open electrical network to permit current flow in the electrical network. The circuit interruption device may be, for example, a circuit breaker.

During normal operation, the circuit interruption assembly is closed to enable current to flow freely therethrough and thereby permit the operation of the associated electrical network. However, under certain circumstances, it may be necessary to interrupt the flow of current in the associated electrical network. Such circumstances may be fault circumstances in which a fault has occurred or may be non-fault circumstances in which a fault is absent. Such circumstances may include, but are not limited to, a fault or other abnormal operating condition in the electrical network that results in a high fault current, shutdown of the electrical network, and repair, testing or maintenance of the electrical network.

If the circuit interruption assembly was opened under fault circumstances, it may be difficult to confirm the successful removal of the fault until after the circuit interruption assembly is reclosed. If the fault has not been successfully removed by the time the circuit interruption assembly is reclosed, a continued presence of the fault in the re-energised electrical network would result in a fault current that could further disrupt the electrical network. If the fault has been successfully removed by the time the circuit interruption assembly is reclosed, the electrical network will be subjected to a relatively abrupt re-energisation that may lead to transients and oscillations that could cause unwanted stress to electrical equipment in the electrical network. Similarly, if the circuit interruption assembly were opened under non-fault circumstances, the reclosure of the circuit interruption assembly would subject the electrical network to the same relatively abrupt re-energisation.

The configuration of the controller to facilitate the pulse width modulation during the closure operation of the circuit interruption assembly enables fine active control over the current flowing in the re-energised electrical network. For example, the pulse width modulation may be used to regulate the average and peak magnitudes of the current flowing in the re-energised electrical network. Regulating the current in the re-energised electrical network during the closure operation of the circuit interruption assembly not only provides active control over a fault current arising from the continued presence of a fault in the re-energised electrical network but also provides greater control over voltage recovery in the re-energised electrical network to provide lower voltage transients and stress of electrical equipment in the electrical network, and greater control over the current flowing in the re-energised electrical network to reduce transients and oscillations in the electrical network.

Preferably the controller is configured to selectively control the switching of the or each first switching element to carry out the pulse width modulation to limit the current flowing through the circuit interruption device to a safe current level in response to a fault in the electrical network during the closure operation of the circuit interruption assembly. The safe current level corresponds to a current level at or below which the associated electrical equipment is protected from damage and/or malfunction.

Limiting the current in the re-energised electrical network to a safe current level during the closure operation of the circuit interruption assembly not only protects the electrical equipment in the electrical network but also provides a controlled time period in which the re-energised electrical network can undergo a fault location discrimination process to determine whether it is in a healthy or faulty state. If the re-energised electrical network is determined to be in a faulty state, the circuit interruption assembly is then re-opened.

The pulse width modulation may be carried out during part or the whole of the duration of the closure operation of the circuit interruption assembly. Preferably the pulse width modulation is initiated at the same time as the start of the closure operation of the circuit interruption assembly, but in other embodiments may be initiated after a predetermined time period has lapsed subsequent to the start of the closure operation of the circuit interruption assembly.

The controller may be configured to selectively control the switching of the or each first switching element to carry out the closure operation of the circuit interruption assembly. The closure operation may be initiated automatically (e.g. by a time delay setting) or manually (e.g. by an operator-inputted manual command).

The circuit interruption assembly may include a detector for detecting a fault in the electrical network.

The controller may be configured to selectively control the switching of the or each first switching element to carry out the closure operation of the circuit interruption assembly in response to the detection of the fault by the detector.

In embodiments of the invention, the circuit interruption device may include an energy dissipation or absorption branch extending between the first and second electrical terminals, the energy dissipation or absorption branch including at least one energy dissipation or absorption element. In such embodiments, the or each first switching element may be configured to be switchable to selectively: close to permit current to flow in the first current-conductive branch; and open to commutate current from the first current-conductive branch to the or each energy dissipation or absorption element.

Commutating the current from the first current-conductive branch to the or each energy dissipation or absorption element improves the effectiveness of the pulse width modulation in regulating the current through the circuit interruption device during a closure operation of the circuit interruption assembly. This is because the or each energy dissipation or absorption element acts to reduce current flowing therethrough, thus enhancing the current regulation capability of the pulse width modulation.

In addition the or each first switching element may be controlled to commutate current from the first current-conductive branch to the or each energy dissipation or absorption element during the opening of the circuit interruption assembly, so that the or each energy dissipation or absorption element acts to oppose the flow of current therethrough as part of the circuit interruption process.

The or each energy dissipation or absorption element may be, but is not limited to, a linear resistive element, a non-linear resistive element or an energy storage device. The or each non-linear resistive element may be, but is not limited to, a metal-oxide varistor or a surge arrester. The or each energy storage device may be, but is not limited to, a capacitor, fuel cell or battery.

In further embodiments of the invention, the first current-conductive branch may include a plurality of first switching elements. The first current-conductive branch may include a plurality of series-connected first switching elements, a plurality of parallel-connected first switching elements or a combination thereof.

In such embodiments, the controller may be configured to selectively control the switching of the first switching elements so that the pulse width modulation is carried out using one, some or all of the first switching elements during the closure operation of the circuit interruption assembly.

By carrying out the pulse width modulation using multiple first switching elements, the in-service times of the multiple first switching elements can be controlled to distribute the current load and thermal duty among the multiple first switching elements. This in turn not only extends the lifetimes of the first switching elements but also reduces the risk of damage and/or malfunction from overheating.

Preferably the current load and thermal duty are shared equally among the multiple first switching elements.

Any first switching element not used to carry out the pulse width modulation is preferably closed and not re-opened during the closure operation.

In embodiments employing the use of multiple energy dissipation or absorption elements, the multiple first switching elements may be controlled to control the in-service times of the multiple energy dissipation or absorption elements during the pulse width modulation in order to distribute the current load and thermal duty among the multiple energy dissipation or absorption elements. Preferably the current load and thermal duty are shared equally among the multiple energy dissipation or absorption elements. This in turn not only extends the lifetimes of the energy dissipation or absorption elements but also reduces the risk of damage and/or malfunction from overheating.

In still further embodiments of the invention, the circuit interruption device may be a DC circuit interruption device, and the first and second electrical terminals may be for connection to a DC electrical network. A DC circuit interruption device may be any device that is capable of interrupting direct current flow in a DC electrical network. Such a DC circuit interruption device may be, but is not limited to, a DC circuit breaker.

The or each first switching element may be, but is not limited to, an electronic switching element.

The or each electronic switching element in the first current-conductive branch improves the quality of the pulse width modulation and thereby enhances the regulation of the current flowing through the circuit interruption device during the closure operation of the circuit interruption assembly. Furthermore, in embodiments of the invention employing the use of the energy dissipation or absorption branch, the or each electronic switching element in the first current-conductive branch enables fast commutation of current from the first current-conductive branch to the energy dissipation or absorption branch to improve the responsiveness of the circuit interruption assembly to a requirement to open or close the circuit interruption assembly.

At least one electronic switching element may include a plurality of series-connected electronic switching devices, a plurality of parallel-connected electronic switching devices or a combination thereof. The number of electronic switching devices in the or each electronic switching element may vary depending on the required voltage and current ratings of that electronic switching element.

Examples of electronic switching devices include an insulated gate bipolar transistor (IGBT), a gate turn-off thyristor (GTO), a field effect transistor (FET), a metal-oxide-semiconductor field-effect transistor (MOSFET), an injection-enhanced gate transistor (IEGT), an integrated gate commutated thyristor (IGCT), a bimode insulated gate transistor (BIGT) or any other self-commutated semiconductor device. The or each electronic switching element may be a wide-bandgap material-based switching element or a silicon semiconductor-based switching element. Examples of wide-bandgap materials include, but are not limited to, silicon carbide, boron nitride, gallium nitride and aluminium nitride.

At least one electronic switching element may further include a passive current check element that is connected in anti-parallel with the or each electronic switching device. The or each passive current check element may include at least one passive current check device. The or each passive current check device may be any device that is capable of limiting current flow in only one direction, e.g. a diode. The number of passive current check devices in each passive current check element may vary depending on the required voltage and current ratings of that passive current check element.

In embodiments of the invention, the circuit interruption assembly may include a second current-conductive branch extending between the first and second electrical terminals, wherein the second current-conductive branch may include at least one second switching element configured to be switchable to selectively: close to permit current to flow in the second current-conductive branch; and open to commutate current from the second current-conductive branch to the first current-conductive branch. The controller may be configured for controlling the or each second switching element.

The or each second switching element may be optimised for carrying the load current during normal operation of the electrical network so that the or each first switching element is not required to carry the load current during normal operation of the electrical network. This in turn allows the or each first switching element to be optimised to carry out specific switching functions including the pulse width modulation during the closure operation of the circuit interruption assembly.

In order to open the circuit interruption assembly in such embodiments, the or each second switching element is controlled to commutate current from the second current-conductive branch to the first current-conductive branch. In embodiments employing the use of the energy dissipation or absorption branch, the or each first switching element is then controlled to commutate current from the first current-conductive branch to the energy dissipation or absorption branch.

The controller may be configured to selectively control the switching of the or each second switching element to carry out the closure operation of the circuit interruption assembly. The controller may be configured to selectively control the switching of the or each second switching element to carry out the closure operation of the circuit interruption assembly in response to the detection of the fault by the detector.

Preferably the at least one second switching element includes at least one mechanical switching element, at least one electronic switching element or a combination thereof.

The or each mechanical switching element provides the circuit interruption device with the requisite high voltage capability to carry out circuit interruption at higher voltage levels. In addition the or each mechanical switching element provides a very low conduction voltage drop at low cost and complexity and thereby is suitable to carry the load current during normal operation of the electrical network. This not only provides a cost-efficient configuration that significantly decreases power loss but also reduces associated cooling requirements and operating costs. Furthermore, the or each mechanical switching element requires only a short travel distance of its contact elements, which in turn allows fast operation that is required for reliable current interruption but with a low actuation force.

Examples of mechanical switching elements include, but are not limited to, a vacuum switching element or a gas insulated switching element, such as an SF₆ insulated switching element. At least one mechanical switching element may include a plurality of series-connected mechanical switching devices, a plurality of parallel-connected mechanical switching devices or a combination thereof. The number of mechanical switching devices in the or each mechanical switching element may vary depending on the required voltage and current ratings of that mechanical switching element.

The or each electronic switching element in the second current-conductive branch enables fast commutation of current from the second current-conductive branch to the first current-conductive branch to improve the responsiveness of the circuit interruption assembly to a requirement to open the circuit interruption assembly.

In further embodiments of the invention, the circuit interruption assembly may include a plurality of circuit interruption devices. The plurality of circuit interruption devices may include a plurality of series-connected circuit interruption devices, a plurality of parallel-connected circuit interruption devices or a combination thereof. The number of circuit interruption devices in the circuit interruption assembly may vary depending on the required voltage and current ratings of the circuit interruption assembly.

In embodiments of the invention employing the use of a plurality of circuit interruption devices, the controller may be configured to selectively control the switching of the first switching elements so that the pulse width modulation is carried out using one, some or all of the circuit interruption devices during the closure operation of the circuit interruption assembly.

By carrying out the pulse width modulation using multiple circuit interruption devices, the in-service times of the multiple circuit interruption devices can be controlled to distribute the current load and thermal duty among the multiple circuit interruption devices. This in turn not only extends the lifetimes of the circuit interruption devices but also reduces the risk of damage and/or malfunction from overheating.

According to a second aspect of the invention, there is provided an electrical network comprising a plurality of electrical terminals, a plurality of power transmission media and a plurality of circuit interruption assemblies, the plurality of power transmission media configured to interconnect the plurality of electrical terminals, each circuit interruption assembly in accordance with any one of the preceding claims and associated with one or more of the plurality of power transmission media, each circuit interruption assembly to selectively: close to permit current flow in the or each corresponding power transmission medium; and open to interrupt current flow in the or each corresponding power transmission medium.

The features and advantages of the first aspect of the invention and its embodiments apply mutatis mutandis to the features and advantages of the second aspect of the invention and its embodiments.

In the electrical network of the invention, the controllers may be configured to selectively: open one, some or all of the circuit interruption assemblies to interrupt current flow in the or each corresponding power transmission medium in response to a fault in the electrical network; and, after a predetermined time period has lapsed, initiate a closure operation of the open circuit interruption assembly or some or all of the open circuit interruption assemblies.

A power transmission medium may be any medium that is capable of transmitting electrical power between two or more electrical terminals. Such a medium may be, but is not limited to, a submarine power transmission cable, an overhead power transmission line or cable and an underground power transmission cable.

Certain fault or non-fault circumstances may require isolation of one or more sections of the electrical network and continued normal operation of the rest of the electrical network with minimal downtime. After some or all of the circuit interruption assemblies are opened to isolate one or more sections of the electrical network, the rest of the electrical network may be returned to service by reclosing one or more of the open circuit interruption assemblies. Using pulse width modulation to regulate the current in the re-energised electrical network during the closure operation of the or each previously open circuit interruption assembly beneficially protects the rest of the electrical network that is returned to service from high fault currents and unwanted transients and stress. The ability of each circuit interruption assembly to locally carry out the pulse width modulation is particularly beneficial for electrical networks with complex topologies.

Detection of a fault in the electrical network may be carried out at a respective local station associated with each circuit interruption assembly. Such detection may be carried out by, for example, carrying out direct or derivative measurements of current and/or voltage characteristics of the or each corresponding power transmission medium. Preferably each station includes fault detection equipment to detect the fault.

According to a third aspect of the invention, there is provided a method of operating a circuit interruption assembly comprising a circuit interruption device, the circuit interruption device comprising:
first and second electrical terminals for connection to an electrical network; and
a first current-conductive branch extending between the first and second electrical terminals, the first current-conductive branch including at least one first switching element, the or each first switching element configured to be switchable to selectively: close to permit current to flow in the first current-conductive branch; and open to block current from flowing in the first current-conductive branch,
wherein the method comprises the step of controlling the switching of the or each first switching element to carry out pulse width modulation to regulate current flowing through the circuit interruption device during a closure operation of the circuit interruption assembly.

The features and advantages of the first and second aspects of the invention and their embodiments apply mutatis mutandis to the features and advantages of the third aspect of the invention and its embodiments.

The method of the invention may include the step of controlling the switching of the or each first switching element to carry out the closure operation of the circuit interruption assembly. This step may be initiated automatically (e.g. by a time delay setting) or manually (e.g. by an operator-inputted manual command).

The method of the invention may include the step of detecting a fault in the electrical network.

The method of the invention may include the step of controlling the switching of the or each first switching element to carry out the closure operation of the circuit interruption assembly in response to the detection of the fault.

The method of the invention may include the step of controlling the switching of the or each first switching element to carry out the pulse width modulation to limit the current flowing through the circuit interruption device to a safe current level in response to a fault in the electrical network during the closure operation of the circuit interruption assembly.

In the method of the invention, the circuit interruption device may include an energy dissipation or absorption branch extending between the first and second electrical terminals, the energy dissipation or absorption branch including at least one energy dissipation or absorption element. In such embodiments of the method of the invention, the or each first switching element may be configured to be switchable to selectively: close to permit current to flow in the first current-conductive branch; and open to commutate current from the first current-conductive branch to the or each energy dissipation or absorption element.

In the method of the invention, the or each energy dissipation or absorption element may be a linear resistive element, a non-linear resistive element or an energy storage device.

In the method of the invention, the first current-conductive branch may include a plurality of first switching elements. The method of the invention may include the step of controlling the switching of the first switching elements so that the pulse width modulation is carried out using one, some or all of the first switching elements.

In the method of the invention, the circuit interruption device may be a DC circuit interruption device, and the first and second electrical terminals may be for connection to a DC electrical network.

In the method of the invention, the or each first switching element may be an electronic switching element.

In the method of the invention, the circuit interruption assembly may include a second current-conductive branch extending between the first and second electrical terminals, wherein the second current-conductive branch includes at least one second switching element configured to be switchable to selectively: close to permit current to flow in the second current-conductive branch; and open to commutate current from the second current-conductive branch to the first current-conductive branch.

The method of the invention may include the step of controlling the switching of the or each second switching element to carry out the closure operation of the circuit interruption assembly. The method of the invention may include the step of controlling the switching of the or each second switching element to carry out the closure operation of the circuit interruption assembly in response to the detection of the fault.

In the method of the invention, the circuit interruption assembly may include a plurality of circuit interruption devices. The method of the invention may include the step of controlling the switching of the first switching elements so that the pulse width modulation is carried out using one, some or all of the circuit interruption devices.

The method of the invention is applicable to an electrical network comprising a plurality of electrical terminals, a plurality of power transmission media and a plurality of circuit interruption assemblies, the plurality of power transmission media configured to interconnect the plurality of electrical terminals, each circuit interruption assembly associated with one or more of the plurality of power transmission media, each circuit interruption assembly operable to selectively: close to permit current flow in the or each corresponding power transmission medium; and open to interrupt current flow in the or each corresponding power transmission medium, wherein each circuit interruption assembly comprises a circuit interruption device, the circuit interruption device comprising:
first and second electrical terminals for connection to an electrical network; and
a first current-conductive branch extending between the first and second electrical terminals, the first current-conductive branch including at least one first switching element, the or each first switching element configured to be switchable to selectively: close to permit current to flow in the first current-conductive branch; and open to block current from flowing in the first current-conductive branch.

According to a fourth aspect of the invention, there is provided a method of fault clearance for an electrical network comprising a plurality of electrical terminals, a plurality of power transmission media and a plurality of circuit interruption assemblies, the plurality of power transmission media configured to interconnect the plurality of electrical terminals, each circuit interruption assembly associated with one or more of the plurality of power transmission media, each circuit interruption assembly operable to selectively: close to permit current flow in the or each corresponding power transmission medium; and open to interrupt current flow in the or each corresponding power transmission medium, wherein each circuit interruption assembly comprises a circuit interruption device, the circuit interruption device comprising:
first and second electrical terminals for connection to an electrical network; and
a first current-conductive branch extending between the first and second electrical terminals, the first current-conductive branch including at least one first switching element, the or each first switching element configured to be switchable to selectively: close to permit current to flow in the first current-conductive branch; and open to block current from flowing in the first current-conductive branch,
wherein the method comprises the steps of:
   opening one, some or all of the circuit interruption assemblies to interrupt current flow in the or each corresponding power transmission medium in response to a fault in the electrical network; and
   after a predetermined time period has lapsed, initiating a closure operation of the open circuit interruption assembly or some or all of the open circuit interruption assemblies and carrying out the method of any one of the third aspect of the invention and its embodiments.

The features and advantages of the first, second and third aspects of the invention and their embodiments apply mutatis mutandis to the features and advantages of the fourth aspect of the invention and its embodiments.

It will be understood that the controller may be implemented as a single control unit or a plurality of control units. For example, the controller may include a plurality of control units, each of which is configured to control a respective switching element of the circuit interruption device. Each control unit may be configured to communicate with at least one other control unit via telecommunications links and/or a central control unit. Each control unit may be configured to communicate with a central control unit via telecommunications links.

In embodiments employing a plurality of controllers, the controllers may be implemented as separate controllers or may be implemented as part of the same control system. Each controller may be configured to communicate with at least one other controller via telecommunications links and/or a central controller (also known as a global controller). Each controller may be configured to communicate with a central controller via telecommunications links.

It will be appreciated that the use of the terms "first" and "second", and the like, in this patent specification is merely intended to help distinguish between similar features, and is not intended to indicate the relative importance of one feature over another feature, unless otherwise specified.

Within the scope of this application it is expressly intended that the various aspects, embodiments, examples and alternatives set out in the preceding paragraphs, and the claims and/or the following description and drawings, and in particular the individual features thereof, may be taken independently or in any combination. That is, all embodiments and all features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

Preferred embodiments of the invention will now be described, by way of non-limiting examples, with reference to the accompanying drawings in which:
Figure 1 shows a circuit interruption assembly according to a first embodiment of the invention;
Figure 2 shows a circuit interruption assembly according to a second embodiment of the invention;
Figure 3 shows a circuit interruption assembly according to a third embodiment of the invention;
Figure 4 shows a DC power grid according to a fourth embodiment of the invention; and
Figure 5 shows an exemplary occurrence of a fault in the DC power grid of Figure 4.

The figures are not necessarily to scale, and certain features and certain views of the figures may be shown exaggerated in scale or in schematic form in the interests of clarity and conciseness.

The following embodiments of the invention are described with reference to HVDC applications but it will be appreciated that the following embodiments of the invention are applicable mutatis mutandis to other applications operating at different voltage levels.

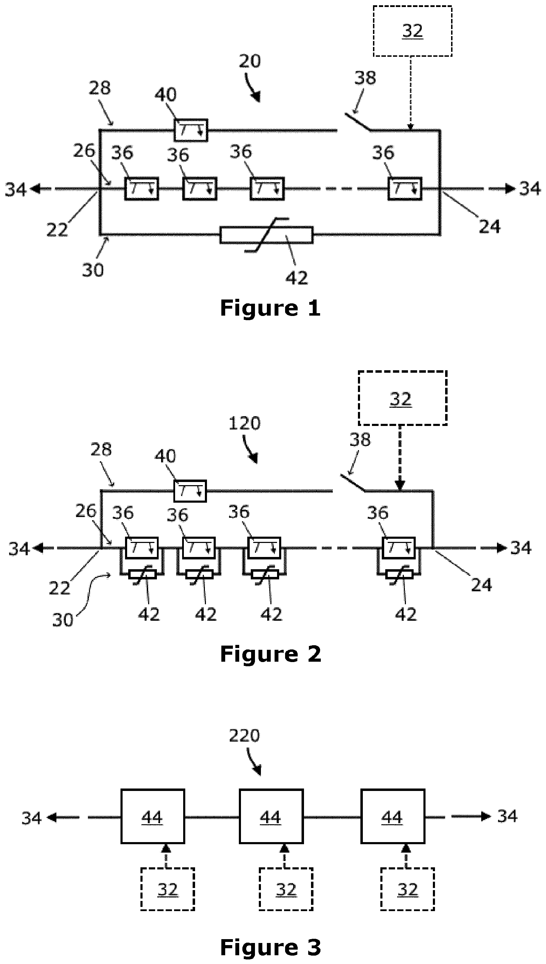

A DC circuit interruption assembly according to a first embodiment of the invention is shown in Figure 1 and is designated generally by the reference numeral 20. The DC circuit interruption assembly 20 comprises a DC circuit breaker that comprises first and second electrical terminals 22,24, a first current-conductive branch 26, a second current-conductive branch 28, an energy dissipation or absorption branch 30 and a controller 32. The first current-conductive branch 26, the second current-conductive branch 28 and the energy dissipation or absorption branch 30 are connected in parallel between the first and second electrical terminals 22,24. In use, the first and second electrical terminals 22,24 are connected to a DC electrical network 34.

The first current-conductive branch 26 includes a plurality of series-connected first switching elements in the form of IGBTs 36. A respective diode is preferably connected in anti-parallel with a respective one of the IGBTs 36. The second current-conductive branch 28 includes a plurality of series-connected second switching elements in the form of a single high voltage, mechanical switching element 38 in series with a single low voltage, electronic switching element 40. The low voltage, electronic switching element 40 is in the form of an IGBT. In other embodiments, it is envisaged that the single high voltage, mechanical switching element 38 may be replaced by a plurality of series-connected high voltage, mechanical switching elements 38 and/or the single low voltage, electronic switching element 40 may be replaced by a plurality of series-connected low voltage, electronic switching elements 40. The energy dissipation or absorption branch 30 includes an energy dissipation or absorption element that is in the form of a zinc oxide surge arrester 42 but in other embodiments may take the form of another type of resistive element or energy absorption or dissipation element.

The controller 32 is configured, e.g. programmed, to selectively open and close each switching element 36,38,40 to control a flow of current in the respective current-conductive branch 26,28 and thereby control a flow of current between the first and second electrical terminals 22,24.

For the purposes of simplicity, the controller 32 is exemplarily described with reference to its implementation as a single control unit. In other embodiments, the controller 32 may be implemented as a plurality of control units. The configuration of the controller 32 may vary depending on specific requirements of the circuit interruption device. For example, the controller 32 may include a plurality of control units, each of which is configured to control the switching of a respective one of the switching elements 36,38,40. Each control unit may be configured to be internal to, or external of, the corresponding switching element 36,38,40. Alternatively, the controller 32 may include a combination of one or more control units internal to the corresponding switching element 36,38,40 and one or more control units external of the corresponding switching element 36,38,40. Each control unit may be configured to communicate with at least one other control unit via telecommunications links and/or via a central control unit. Each control unit may be configured to communicate with a central control unit via telecommunications links.

Operation of the DC circuit interruption assembly 20 of Figure 1 is described as follows.

During normal operation of the DC electrical network 34, the load current flows through the mechanical switching element 38 that presents a relatively low electrical resistance, and so the load current flows through the second current-conductive branch 28. At this stage little to no current flows through the first current-conductive branch 26 and the energy dissipation or absorption branch 30.

There may be a requirement to interrupt the flow of current in the DC electrical network 34 under certain circumstances such as a fault or other abnormal operating condition in the DC electrical network 34 that results in a high fault current, shutdown of the DC electrical network 34, and repair, testing or maintenance of the DC electrical network 34.

On detection of a fault in the DC electrical network 34 or receipt of an open command, the DC circuit interruption assembly 20 is controlled to open. Initially the low voltage, electronic switching element 40 is turned off to commutate the current from the second current-conductive branch 28 to the first current-conductive branch 26. The mechanical switching element 38 is then opened, followed by the turn-off of the IGBTs 36 to commutate the current from the first current-conductive branch 26 to the energy dissipation or absorption branch 30. The flow of the current through the surge arrester 42 creates a back electromotive force that acts to reduce the flow of current between the first and second electrical terminals 22,24. In this way the DC circuit interruption assembly 20 is operated to carry out a circuit interruption process.

After a predetermined time period has lapsed, the DC circuit interruption assembly 20 is controlled to undergo a closure operation to re-close in order to re-energise the DC electrical network 34. During the closure operation, the IGBTs 36 are turned on and off to carry out pulse width modulation to control the current flowing through the DC circuit breaker and thereby control the current in the re-energised DC electrical network 34. Turning on the IGBTs 36 causes an increasing current to flow through the first current-conductive branch 26. Turning off one or more IGBTs 36 causes the current to commutate from the first current-conductive branch 26 to the energy dissipation or absorption branch 30 so that the resulting back electromotive force acts to reduce the current. By controlling the relative durations of the on and off states of the IGBTs 36 (i.e. a duty ratio of the pulse width modulation), average and peak magnitudes of the current flowing through the DC circuit breaker may be controlled to desired values. In this way the IGBTs 36 can be switched in a pulse width modulation manner to actively regulate current flowing through the DC circuit breaker during the closure operation of the DC circuit interruption assembly 20. It will be appreciated that it is not essential for the IGBTs 36 to be turned on and off synchronously during the pulse width modulation.

The active regulation of the current in the re-energised DC electrical network 34 during the closure operation of the DC circuit interruption assembly 20 enables the limitation of the current to a safe current level in the event of the presence of a fault in the DC electrical network 34. This protects electrical equipment in the DC electrical network 34 from high fault currents in the period of time before the DC circuit interruption assembly 20 is re-opened.

In the event that a fault is absent from the DC electrical network 34 during the closure operation, the active regulation of the current in the re-energised DC electrical network 34 during the closure operation of the DC circuit interruption assembly 20 provides active control over voltage recovery in the re-energised DC electrical network 34 to provide lower voltage transients and stress of electrical equipment in the DC electrical network 34, and active control over the current flowing in the re-energised DC electrical network 34 to reduce transients and oscillations in the DC electrical network 34.

The closure operation of the DC circuit interruption assembly 20 is completed by closing the mechanical switching element 38 and the low voltage electronic switching element 40 so that the current once again flows through the second current-conductive branch 28.

A DC circuit interruption assembly according to a second embodiment of the invention is shown in Figure 2 and is designated generally by the reference numeral 120. The DC circuit interruption assembly 120 of Figure 2 is similar in structure and operation to the DC circuit interruption assembly 20 of Figure 1, and like features share the same reference numerals.

The DC circuit interruption assembly 120 of Figure 2 differs from the DC circuit interruption assembly 20 of Figure 1 in that the energy dissipation or absorption branch 30 of the DC circuit interruption assembly 120 of Figure 2 includes a plurality of surge arresters 42, each of which is connected in parallel with a respective one of the IGBTs 36.

Each IGBT 36 is switchable to commutate current from the IGBT 36 to the corresponding surge arrester 42. Thus, it becomes possible to control the current to flow through a combination of IGBTs 36 and surge arresters 42 during the pulse width modulation. Such current flow permits finer control over the current in the re-energised DC electrical network 34 during the closure operation of the DC circuit interruption assembly 20. The controller 32 may be configured so that one, some or all of the IGBTs 36 are controlled to carry out the pulse width modulation during the closure operation of the DC circuit interruption assembly 20.

A higher voltage rating of the DC circuit interruption assembly 20,120 can be realised by increasing the voltage ratings of its individual components. An alternative approach is to use two or more series-connected circuit interruption devices 20,120, each of which is configured to have a voltage rating that is less than the required overall voltage rating. The sub-division of the overall voltage rating into individual voltage ratings for a plurality of circuit interruption devices 20,120 allows the use of lower voltage electrical components.

A DC circuit interruption assembly 220 according to a third embodiment of the invention is shown in Figure 3.

The DC circuit interruption assembly 220 comprises a plurality of series-connected DC circuit breakers 44. Each DC circuit breaker 44 is similar in structure and operation to the DC circuit breaker of Figure 1 or Figure 2, and like features share the same reference numerals. In the embodiment shown, the DC circuit interruption assembly 220 includes three DC circuit breakers 44 but in other embodiments may include a different number of multiple DC circuit breakers 44.

At least one of the plurality of DC circuit breakers 44 may have a voltage rating that is the same as or different from at least one other of the plurality of DC circuit breakers 44.

Each controller 32 of the DC circuit breakers 44 is configured to control the switching of the corresponding switching elements 36,38,40 so that the DC circuit breakers 44 initiate the same mode of operation at the same time or at different times. In particular, the controllers 32 may be configured so that one, some or all of the DC circuit breakers 44 are operated to carry out the pulse width modulation during the closure operation of the DC circuit interruption assembly 20.

In a circuit interruption process, one or more of the series-connected DC circuit breakers 44 may be designated as a "main" circuit breaker, while one or more other of the series-connected DC circuit breakers 44 may be designated as a "back-up" circuit breaker.

During the opening of the DC circuit interruption assembly 220, the "main" circuit breaker(s) may be operated to open while the "back-up" circuit breaker(s) remain closed. If the circuit interruption by the "main" circuit breaker(s) fails, then the "back-up" circuit breaker(s) may be operated to open to carry out the circuit interruption. During the closing of the DC circuit interruption assembly 220, the "main" circuit breaker(s) may be operated to close while the "back-up" circuit breaker(s) remain open. If the closure operation by the "main" circuit breaker(s) fails, then the "back-up" circuit breaker(s) may be operated to close to carry out the closure operation. The circuit interruption and closure operation failure events may be detected through electrical measurement, particularly current measurement.

In this way the plurality of DC circuit breakers 44 provides the DC circuit interruption assembly 220 with built-in redundancy for the circuit interruption and closure processes.

The controllers 32 may be implemented as separate controllers 32 or may be implemented as part of the same control system. Each controller 32 may be configured to communicate with at least one other controller 32 via telecommunications links and/or a central controller. Each controller 32 may be configured to communicate with a central controller via telecommunications links.

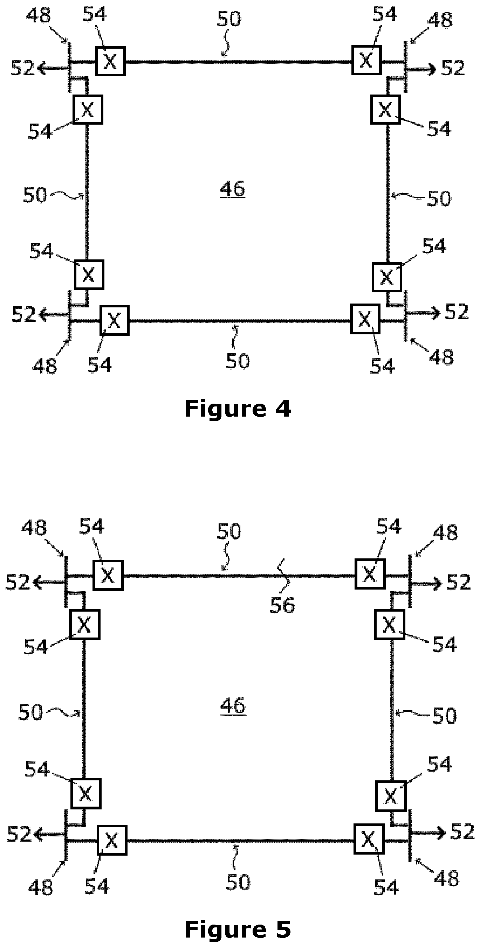

An exemplary fault clearance procedure for a DC power grid 46 according to an embodiment of the invention is described as follows, with reference to Figures 4 and 5.

Figure 4 shows a DC power grid 46 that comprises four DC terminals 48 and four DC power transmission lines 50. Each DC terminal 48 is connected to a power converter 52, while the four DC power transmission lines 50 are arranged to interconnect the DC terminals 48, as follows. A first end of a first DC power transmission line 50 is connected to a first DC terminal 48, while a second end of the first DC power transmission line 50 is connected to a second DC terminal 48. A first end of a second DC power transmission line 50 is connected to the second DC terminal 48, while a second end of the second DC power transmission line 50 is connected to a third DC terminal 48. A first end of a third DC power transmission line 50 is connected to the third DC terminal 48, while a second end of the third DC power transmission line 50 is connected to a fourth DC terminal 48. A first end of a fourth DC power transmission line 50 is connected to the fourth DC terminal 48, while a second end of the fourth DC power transmission line 50 is connected to the first DC terminal 48.

The use of the DC power transmission lines 50 to interconnect the four DC terminals 48 permits power transfer between the different DC terminals 48 of the DC power grid 46.

The DC power grid 46 further includes a plurality of stations 54. Each station 54 includes a DC circuit interruption assembly that is connected between a respective one of the DC terminals 48 and one end of a respective one of the DC power transmission lines 50, so that a pair of DC circuit interruption assemblies is located at opposite ends of each DC power transmission line 50. Each DC circuit interruption assembly is configured in accordance with any one of the DC circuit interruption assemblies 20,120,220 of Figures 1 to 3.

In the DC power grid 46, the controllers 32 may be implemented as separate controllers 32 or may be implemented as part of the same control system. Each controller 32 may be configured to communicate with at least one other controller 32 via telecommunications links and/or a central controller. Each controller 32 may be configured to communicate with a central controller via telecommunications links.

Configuration of the DC power grid 46 in this manner allows each DC circuit interruption assembly to selectively interrupt current flow in the corresponding DC power transmission line 50, i.e. each DC circuit interruption assembly is controlled to either interrupt or permit current flow in the corresponding DC power transmission line 50.

Each station 54 further includes fault detection equipment (not shown) to locally carry out direct or derivative measurements of current and/or voltage characteristics of the corresponding DC power transmission line 50. This allows a fault occurring in the corresponding DC power transmission line 50 to be rapidly detected when the fault results in the measured current and/or voltage characteristics falling outside their normal operating ranges. Each DC circuit interruption assembly trips when a fault is detected by the fault detection equipment of the corresponding station 54.

The occurrence of one or more faults occurring in the plurality of the DC power transmission lines 50 may lead to one or more fault currents flowing through the DC power grid 46. The fault may be in the form of, for example, a short circuit with low impedance that occurs due to damage or breakdown of insulation, lightning strikes, movement of conductors or other accidental bridging between conductors by a foreign object. Faults in the DC power grid 46 need to be quickly isolated and segregated from the rest of the DC power grid 46 in order to enable the DC power grid 46 to resume normal power transmission as soon as possible.

The following description of a fault clearance procedure for the DC power grid 46 is described with reference to a location of a fault 56 in the first DC power transmission line 50, as shown in Figure 5. It will be appreciated that the following description applies mutatis mutandis to the fault being located elsewhere in the DC power grid 46.

On detection of the fault 56, the DC circuit interruption assemblies are controlled to open. After the current in the faulty first DC power transmission line 50 is decreased to a zero or near-zero value, the faulty first DC power transmission line 50 is isolated by keeping the corresponding DC circuit interruption assemblies in their open states. Each of the other DC circuit interruption assemblies then undergo a closure operation in order to reclose so that the healthy second, third and fourth DC power transmission lines 50 can be returned to service to resume power transmission. During the closure operation of each of the other DC circuit interruption assemblies, the corresponding IGBTs 36 are controlled to carry out the pulse width modulation as previously described to control the current flowing through the corresponding DC circuit breakers and thereby control the current in the re-energised DC power grid 46.

In the event that the other DC power transmission lines 50 remain exposed to a fault that may be due to unsuccessful isolation of the original fault 56 or due to occurrence of a new fault in the DC power grid 46, the use of the pulse width modulation to regulate the current in the re-energised DC power grid 46 during the closure operations prevents the DC power grid 46 from being exposed to high fault currents for a short time period during which a fault location discrimination process is carried out to identify the location of the fault. After the fault location is determined, then one or more of the DC circuit interruption assemblies may be re-opened to isolate the fault. The aforementioned use of the pulse width modulation to regulate the current in the re-energised DC power grid 46 during the closure operations also enables the re-opening of the other DC circuit interruption assemblies at lower fault currents.

If the re-energised DC power grid 46 is in a healthy state, the use of the pulse width modulation to regulate the current in the re-energised DC power grid 46 during the closure operations prevents unwanted transients and stress in the DC power grid 46.

It will be appreciated that the invention is applicable to a DC power grid having a different number of DC terminals and a different arrangement of DC power transmission lines to interconnect the DC terminals. Such a DC power grid may be, but is not limited to, a mesh-connected DC power grid or a radial-connected DC power grid.

It will also be appreciated that the invention is applicable to a DC power grid having other types of DC power transmission media such as, for example, a submarine DC power transmission cable, an overhead DC power transmission line or cable and an underground DC power transmission cable.

Non-limiting examples and configurations of electronic switching elements, mechanical switching elements and energy dissipation or absorption elements described elsewhere in this specification may be applied to the foregoing embodiments.

It is envisaged that, in other embodiments of the invention, the low voltage electronic switching element may be omitted from the second current-conductive branch. In such embodiments, the mechanical switching element may be controlled to commutate the current from the second current-conductive branch to the first current-conductive branch.

The term "across" is interchangeable with "in parallel" in the context of describing a connection of two electrical components, elements or sections. For example, if an electrical component is connected across another electrical component, the electrical component is connected in parallel with the other electrical component.

When an electrical component is configured to extend between electrical terminals, the electrical component may be directly or indirectly connected to each electrical terminal as long as the electrical component is electrically connected between the electrical terminals.

It will be appreciated that any aforementioned numerical value is merely intended to help illustrate the working of the invention and may vary depending on the requirements of the invention.

The listing or discussion of an apparently prior-published document or apparently prior-published information in this specification should not necessarily be taken as an acknowledgement that the document or information is part of the state of the art or is common general knowledge.

Preferences and options for a given aspect, feature or parameter of the invention should, unless the context indicates otherwise, be regarded as having been disclosed in combination with any and all preferences and options for all other aspects, features and parameters of the invention.

## Claims

1. A circuit interruption assembly (20,120,220) comprising a circuit interruption device (44), the circuit interruption device (44) comprising:
first and second electrical terminals (22,24) for connection to an electrical network (34,46);
a first current-conductive branch (26) extending between the first and second electrical terminals (22,24), the first current-conductive branch (26) including at least one first switching element (36), the or each first switching element (36) configured to be switchable to selectively: close to permit current to flow in the first current-conductive branch (26); and open to block current from flowing in the first current-conductive branch (26); and
a controller (32) configured to selectively control the switching of the or each first switching element (36) to carry out pulse width modulation to regulate current flowing through the circuit interruption device (44) during a closure operation of the circuit interruption assembly (20,120,220).

2. A circuit interruption assembly (20,120,220) according to Claim 1 wherein the controller (32) is configured to selectively control the switching of the or each first switching element (36) to carry out the pulse width modulation to limit the current flowing through the circuit interruption device (44) to a safe current level in response to a fault (56) in the electrical network (34,46) during the closure operation of the circuit interruption assembly (20,120,220).

3. A circuit interruption assembly (20,120,220) according to any one of the preceding claims wherein the circuit interruption device (44) includes an energy dissipation or absorption branch (30) extending between the first and second electrical terminals (22,24), the energy dissipation or absorption branch (30) including at least one energy dissipation or absorption element (42), and the or each first switching element (36) is configured to be switchable to selectively: close to permit current to flow in the first current-conductive branch (26); and open to commutate current from the first current-conductive branch (26) to the or each energy dissipation or absorption element (42).

4. A circuit interruption assembly (20,120,220) according to Claim 3 wherein the or each energy dissipation or absorption element (42) is a linear resistive element, a non-linear resistive element or an energy storage device.

5. A circuit interruption assembly (20,120,220) according to any one of the preceding claims wherein the first current-conductive branch (26) includes a plurality of first switching elements (36), and the controller (32) is configured to selectively control the switching of the first switching elements (36) so that the pulse width modulation is carried out using all of the first switching elements (36) during the closure operation of the circuit interruption assembly (20,120,220).

6. A circuit interruption assembly (20,120,220) according to any one of Claims 1 to 4 wherein the first current-conductive branch (26) includes a plurality of first switching elements (36), and the controller (32) is configured to selectively control the switching of the first switching elements (36) so that the pulse width modulation is carried out using one or some of the first switching elements (36) during the closure operation of the circuit interruption assembly (20,120,220).

7. A circuit interruption assembly (20,120,220) according to any one of the preceding claims wherein the circuit interruption device (44) is a DC circuit interruption device (44), and the first and second electrical terminals (22,24) are for connection to a DC electrical network (34,46).

8. A circuit interruption assembly (20,120,220) according to any one of the preceding claims wherein the or each first switching element (36) is an electronic switching element.

9. A circuit interruption assembly (20,120,220) according to any one of the preceding claims including a second current-conductive branch (28) extending between the first and second electrical terminals (22,24), wherein the second current-conductive branch (28) includes at least one second switching element (38,40) configured to be switchable to selectively: close to permit current to flow in the second current-conductive branch (28); and open to commutate current from the second current-conductive branch (28) to the first current-conductive branch (26).

10. A circuit interruption assembly (220) according to any one of the preceding claims including a plurality of circuit interruption devices (44), wherein the controller (32) is configured to selectively control the switching of the first switching elements (36) so that the pulse width modulation is carried out using all of the circuit interruption devices (44) during the closure operation of the circuit interruption assembly (220).

11. A circuit interruption assembly (220) according to any one of the preceding claims including a plurality of circuit interruption devices (44), wherein the controller (32) is configured to selectively control the switching of the first switching elements (36) so that the pulse width modulation is carried out using one or some of the circuit interruption devices (44) during the closure operation of the circuit interruption assembly (220).

12. An electrical network (46) comprising a plurality of electrical terminals (48), a plurality of power transmission media (50) and a plurality of circuit interruption assemblies (20,120,220), the plurality of power transmission media (50) configured to interconnect the plurality of electrical terminals (48), each circuit interruption assembly (20,120,220) in accordance with any one of the preceding claims and associated with one or more of the plurality of power transmission media (50), each circuit interruption assembly (20,120,220) operable to selectively: close to permit current flow in the or each corresponding power transmission medium (50); and open to interrupt current flow in the or each corresponding power transmission medium (50).

13. An electrical network (34,46) according to Claim 12 wherein the controllers (32) are configured to selectively: open one, some or all of the circuit interruption assemblies (20,120,220) to interrupt current flow in the or each corresponding power transmission medium (50) in response to a fault (56) in the electrical network (34,46); and, after a predetermined time period has lapsed, initiate a closure operation of the open circuit interruption assembly (20,120,220) or some or all of the open circuit interruption assemblies (20,120,220).

14. A method of operating a circuit interruption assembly (20,120,220) comprising a circuit interruption device (44), the circuit interruption device (44) comprising:
first and second electrical terminals (22,24) for connection to an electrical network (34,46); and
a first current-conductive branch (26) extending between the first and second electrical terminals (22,24), the first current-conductive branch (26) including at least one first switching element (36), the or each first switching element (36) configured to be switchable to selectively: close to permit current to flow in the first current-conductive branch (26); and open to block current from flowing in the first current-conductive branch (26),
wherein the method comprises the step of controlling the switching of the or each first switching element (36) to carry out pulse width modulation to regulate current flowing through the circuit interruption device (44) during a closure operation of the circuit interruption assembly (20,120,220).

15. A method of fault clearance for an electrical network (46) comprising a plurality of electrical terminals (48), a plurality of power transmission media (50) and a plurality of circuit interruption assemblies (20,120,220), the plurality of power transmission media (50) configured to interconnect the plurality of electrical terminals (48), each circuit interruption assembly (20,120,220) associated with one or more of the plurality of power transmission media (50), each circuit interruption assembly (20,120,220) operable to selectively: close to permit current flow in the or each corresponding power transmission medium (50); and open to interrupt current flow in the or each corresponding power transmission medium (50), wherein each circuit interruption assembly (20,120,220) comprises a circuit interruption device (44), the circuit interruption device (44) comprising:
first and second electrical terminals (22,24) for connection to an electrical network (46); and
a first current-conductive branch (26) extending between the first and second electrical terminals (22,24), the first current-conductive branch (26) including at least one first switching element (36), the or each first switching element (36) configured to be switchable to selectively: close to permit current to flow in the first current-conductive branch (26); and open to block current from flowing in the first current-conductive branch (26),
wherein the method comprises the steps of:
opening one, some or all of the circuit interruption assemblies (20,120,220) to interrupt current flow in the or each corresponding power transmission medium (50) in response to a fault (56) in the electrical network (46); and
after a predetermined time period has lapsed, initiating a closure operation of the open circuit interruption assembly (20,120,220) or some or all of the open circuit interruption assemblies (20,120,220) and carrying out the method of Claim 14.
